# EUROPÄISCHE PATENTSCHRIFT

(11) **EP 3 252 109 B1**
(45) Veröffentlichungstag und Bekanntmachung des Hinweises auf die Patenterteilung: **17.10.2018**
(21) Anmeldenummer: 16172333.3
(22) Anmeldetag: 31.05.2016
(51) Int. Cl.: C09D 1/04

(54) **BESCHICHTUNGSZUSAMMENSETZUNG**
COATING COMPOSITION
COMPOSITION DE REVETEMENT

(43) Veröffentlichungstag der Anmeldung: 06.12.2017
(73) Patentinhaber: DAW SE, 64372 Ober-Ramstadt (DE)
(72) Erfinder: BEFURT, Uwe, 64372 Ober-Ramstadt (DE); BRENNER, Thomas, 64367 Mühltal (DE); GEGENBACH, Patrick, 64686 Lautertal (DE)
(74) Vertreter: Metten, Karl-Heinz

(56) Entgegenhaltungen:
- EP-A1- 2 998 367
- DE-A1- 19 925 412

## Beschreibung

Die vorliegende Erfindung betrifft eine Beschichtungszusammensetzung. Des Weiteren betrifft die Erfindung Substrate, insbesondere flächige Substrate, mit einer Beschichtung auf Basis der erfindungsgemäßen Beschichtungszusammensetzung sowie die Verwendung der Beschichtungszusammensetzung für die Beschichtung von Substratoberflächen, insbesondere Gebäudewänden.

Für die farbliche Gestaltung von Gebäudewänden sind seit langem zahlreiche Beschichtungssysteme bekannt. Diese basieren zum Beispiel auf Dispersionsfarben, Silikatfarben oder Dispersionssilikatfarben. In Abhängigkeit davon, ob eine Beschichtungszusammensetzung für die Aufbringung an einer Gebäudefassade oder im Gebäudeinneren vorgesehen ist, sind unterschiedlichste Eigenschaftsprofile zu erfüllen.

Insbesondere bei Beschichtungszusammensetzungen für Innenraumfarben werden mitunter sehr hohe Anforderungen an den Glanzgrad gestellt. Beispielsweise sollen sich reproduzierbar gewünschte Glanzgrade wie matt, mittlerer Glanz, auch seidenglänzend genannt, und glänzend (beispielweise wie in der DIN 13300 festgelegt) einstellen lassen. Dies gelingt häufig jedoch nicht einwandfrei.

Der vorliegenden Erfindung lag daher die Aufgabe zugrunde, eine Beschichtungsmasse zur Verfügung zu stellen, die nicht mehr mit den Nachteilen des Stands der Technik behaftet ist und die insbesondere Beschichtungen mit den Glanzgraden matt, mittlerer Glanz, auch seidenglänzend genannt, und glänzend ermöglicht. Insbesondere lag der vorliegenden Erfindung die Aufgabe zugrunde, eine solche Beschichtungsmasse, vorzugsweise konservierungsmittelfreie Beschichtungsmasse, verfügbar zu machen, mit der gezielt und wiederholbar in gleichbleibend hoher Qualität seidenglänzende und sogar glänzende Beschichtungen erhalten werden. Des Weiteren lag der vorliegenden Erfindung die Aufgabe zu Grunde, Beschiehtungsmassen, vorzugsweise konservierungsmittelfreie Beschichtungsmassen, zur Verfügung zu stellen, mit denen Beschichtungen, insbesondere seidenglänzende und/oder glänzende Beschichtungen, zugänglich sind, die sich durch eine gute Nassabriebsbeständigkeit auszeichnen.

Demgemäß wurde eine Beschichtungszusammensetzung gefunden, umfassend oder bestehend aus a) mindestens einem organischen Bindemittel, b) Wasserglas, c) Kieselsol, d) mindestens einem ersten Füllstoff und/oder mindestens einem ersten Pigment, insbesondere Titandioxid, mit einer Partikelgröße D₅₀, ermittelt gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/-durchmessern und Momenten aus Partikelgrößenverteilungen) kleiner oder gleich 2,0 µm, vorzugsweise kleiner oder gleich 1 ,0 µm und besonders bevorzugt kleiner 0,8 µm, wobei der Trockengewichtsanteil an Kieselsol größer ist als der Trockengewichtsanteil an Wasserglas, jeweils bezogen auf das Gesamttrockengewicht der Beschichtungszusammensetzung.

Der Trockengewichtsanteil einer Komponente der erfindungsgemäßen Beschichtungszusammensetzungen wird bestimmt anhand des Trockengewichts dieser Komponente. Hierbei handelt es sich um das Gewicht der Komponente abzüglich, sofern vorhanden, des Anteils an Wasser. Das Gesamttrockengewicht der Beschichtungszusammensetzung stellt folglich das Gewicht derselben abzüglich etwaiger Wasseranteile dar. Eine Komponente ohne Wasseranteil kann hierbei fest, flüssig oder in pastöser Form vorliegen.

Die erfindungsgemäßen Beschichtungszusammensetzungen enthalten zweckmäßigerweise Wasser. Der Wassergehalt der erfindungsgemäßen Beschichtungszusammensetzungen liegt in einer bevorzugten Ausführungsform, bezogen auf das Gesamtgewicht der Beschichtungszusammensetzung, im Bereich von 30 bis 50 Gew.-%, besonders bevorzugt im Bereich von 35 bis 45 Gew.-% und insbesondere im Bereich von 36 bis 43 Gew.-%. Der Gehalt der weiteren, die erfindungsgemäße wasserenthaltende Beschichtungszusammensetzung bildenden Komponenten liegt in der Summe dann vorzugsweise im Bereich von 50 bis 70 Gew.-%, besonders bevorzugt im Bereich von 55 bis 65 Gew.-% und insbesondere im Bereich von 57 bis 64 Gew.-%. Sämtliche die erfindungsgemäßen Beschichtungszusammensetzungen, insbesondere auch die wasserenthaltenden Beschichtungszusammensetzungen bildenden Komponenten addieren sich stets zu 100,0 Gew.-%.

Bei den erfindungsgemäßen Beschichtungszusammensetzungen ist darauf zu achten, dass als erste Füllstoffe und/oder erste Pigmente sehr feinteilige Füllstoffe bzw. Pigmente zum Einsatz kommen, die über eine Partikelgröße D₅₀ kleiner oder gleich 2,0 µm, vorzugsweise kleiner oder gleich 1,0 µm und besonders bevorzugt kleiner 0,8 µm verfügen. In Bezug auf die Feinteiligkeit der ersten Füllstoffe haben sich solche als besonders vorteilhaft erwiesen, bei denen der D₁₀-Wert kleiner oder gleich 0,4 µm, vorzugsweise kleiner oder gleich 0,3 µm und besonders bevorzugt kleiner oder gleich 0,2 µm, und/oder der D₅₀-Wert kleiner oder gleich 0,75 µm, vorzugsweise kleiner oder gleich 0,6 µm und besonders bevorzugt kleiner oder gleich 0,5 µm, und/oder der D₉₀-Wert kleiner 2,0 µm, vorzugsweise kleiner oder gleich 1,9 µm und besonders bevorzugt kleiner oder gleich 1,7 µm, ist. Hierbei sind solche erste Füllstoffe besonders zweckmäßig, die einen D₁₀-Wert kleiner oder gleich 0,4 µm, vorzugsweise kleiner oder gleich 0,3 µm und besonders bevorzugt kleiner oder gleich 0,2 µm, und einen D₅₀-Wert kleiner oder gleich 0,75 µm, vorzugsweise kleiner oder gleich 0,6 µm und besonders bevorzugt kleiner oder gleich 0,5 µm, und einen D₉₀-Wert kleiner 2,0 µm, vorzugsweise kleiner oder gleich 1,9 µm und besonders bevorzugt kleiner oder gleich 1,7 µm, aufweisen.

Der Trockengewichtsanteil an dem mindestens einen ersten Füllstoff, bezogen auf das Gesamttrockengewicht der Beschichtungszusammensetzung, ist zweckmäßigerweise größer 2 Gewichtsprozent, vorzugsweise größer 4 Gewichtsprozent und besonders bevorzugt größer 5 Gewichtsprozent. Hierbei sind solche Beschichtungszusammensetzungen besonders vorteilhaft, bei denen die Menge an erstem Füllstoff im Bereich von 5 bis 11 Gewichtsprozent und bevorzugt im Bereich von 6,5 bis 9,0 Gewichtsprozent liegt, jeweils bezogen auf das Gesamttrockengewicht der Beschichtungszubereitung. Bezogen auf das Gesamttrockengewicht an erstem und zweitem Pigment, erstem und zweitem Füllstoff, organischem Bindemittel, Wasserglas und Kieselsol ist der Trockengewichtsanteil an erstem Füllstoff vorzugsweise im Bereich von 3,0 bis 6,0 Gewichtsprozent und bevorzugt im Bereich von 4,0 bis 5,0 Gewichtsprozent.

In den erfindungsgemäßen Beschichtungszusammensetzungen können femer neben den geschilderten ersten Pigmenten und/oder ersten Füllstoffen mindestens ein Farbstoff und/oder mindestens ein zweites Pigment vorliegen mit einer Partikelgröße D₅₀, die größer ist als die Partikelgröße D₅₀ des ersten Füllstoffs, sofern kein erstes Pigment enthalten ist, oder die größer ist als die Partikelgröße D₅₀ des ersten Pigments, sofern kein erster Füllstoff enthalten ist, oder die größer ist als die Partikelgröße D₅₀ des ersten Füllstoffs und des ersten Pigments, sofern erster Füllstoff und ersten Pigment enthalten sind (Komponente f).

In den erfindungsgemäßen Beschichtungszusammensetzungen ist der Trockengewichtsanteil an dem mindestens einen ersten Pigment, insbesondere an Titandioxid, bezogen auf das Gesamttrockengewicht der Beschichtungszusammensetzung, vorteilhafterweise größer 5 Gewichtsprozent, vorzugsweise größer 10 Gewichtsprozent und besonders bevorzugt größer 20 Gewichtsprozent ist. Geeignete Mengen an erstem Pigment liegen auch im Bereich von 1 bis 70 Gewichtsprozent, besonders bevorzugt im Bereich von 8 bis 65 Gewichtsprozent und insbesondere im Bereich von 25 bis 45 Gewichtsprozent vor.

Exemplarisch seien als geeignete erste und/oder zweite Pigmente anorganische Pigmente wie Bunt-, Schwarz- und Weißpigmente (Farbpigmente) sowie Glanzpigmente und organische Pigmente wie Bunt- und Schwarzpigmente genannt.

Als geeignete anorganische Weißpigmente kommen zum Beispiel Titandioxid, Zinkweiß, Farbenzinkoxid; Zinksulfid und/oder Lithopone in Betracht. Unter den anorganischen Chucks Schwarzpigmenten kann zum Beispiel ausgewählt werden unter Eisenoxidschwarz, Eisen-Mangan-Schwarz, Spinellschwarz und/oder Ruß.

Als geeignete anorganische Buntpigmente kann zum Beispiel zurückgegriffen werden auf Chromoxid, Chromoxidhydratgrün, Chromgrün, Cobaltgrün, Ultramaringrün, Kobaltblau, Ultramarinblau, Manganblau, Ultramarinviolett, Kobalt- und Manganviolett, Eisenoxidrot, Cadmiumsulfoselenid, Cersulfid, Molybdatrot, Ultramarinrot, Eisenoxidbraun, Mischbraun, Spinell- und Korundphasen, Chromtitangelb, Chromorange, Cersulfid, Eisenoxidgelb, Nickeltitangelb, Chromtitangelb, Spinellphasen, Cadmiumsulfid, Cadmiumzinksulfid, Chromgelb und/oder Bismutvanadat.

Besonders geeignete erste Pigmente umfassen zum Beispiel Titandioxid, Zinksulfid, Zinkoxid, Baryt, Ruß, Graphit Eisenoxid, Chromoxid, Kobaltblau, Phtalocyaninpigment, Spinellpigment, Nickeltitanat, Chromtitanat und deren beliebige Mischungen.

In einer bevorzugten Ausfuhrungsform verfügen die ersten Pigmente in der erfindungsgemäßen Beschichtungszusammensetzung über einen D₁₀-Wert von kleiner oder gleich 0,4 µm, vorzugsweise kleiner oder gleich 0,35 µm und besonders bevorzugt kleiner oder gleich 0,33 µm, und/oder einen D₅₀-Wert kleiner oder gleich 0,75 µm, vorzugsweise kleiner oder gleich 0,6 µm und besonders bevorzugt kleiner oder gleich 0,5 µm, und/oder einen D₉₀-Wert kleiner 2,0 µm, vorzugsweise kleiner oder gleich 1,75 µm und besonders bevorzugt kleiner oder gleich 1,5 µm, aufweist. Hierbei sind solche erste Pigmente besonders zweckmäßig, die einen D₁₀-Wert von kleiner oder gleich 0,4 µm, vorzugsweise kleiner oder gleich 0,35 µm und besonders bevorzugt kleiner oder gleich 0,33 µm, und einen D₅₀-Wert kleiner oder gleich 0,75 µm, vorzugsweise kleiner oder gleich 0,6 µm und besonders bevorzugt kleiner oder gleich 0,5 µm, und einen D₉₀-Wert kleiner 2,0 µm, vorzugsweise kleiner oder gleich 1,75 µm und besonders bevorzugt kleiner oder gleich 1,5 µm, aufweisen.

Es hat sich gezeigt, dass bei Anwesenheit von Pigmenten das Deckvermögen der erfindungsgemäßen Beschichtungszusammensetzungen nochmals gesteigert werden kann.

Besonders bevorzugt kommen als erste Pigmente Titandioxid und/oder Zinksulfid zum Einsatz. Geeignete erste und/oder zweite Pigmente können sowohl unbeschichtet wie auch beschichtet vorliegen. Unbeschichtete Pigmente, beispielsweise photokatalytisch aktive unbeschichtete Pigmente wie unbeschichtetes Titandioxid sind dem Fachmann bekannt. Überraschend hat sich herausgestellt, dass sich umso zuverlässiger und besser Beschichtungszusammensetzungen mit einer seidenglänzenden, das heißt einer Beschichtung mit mittlerem Glanz gemäß DIN EN ISO 2813:2014 (Datum: 2015 - 02) (bestimmt bei Messwinkeln von 60° und 85°) erhalten lassen, je enger die Teilchengrößenverteilung der ersten Pigmente, insbesondere des Titandioxids oder Zinksulfids, ist.

In einer besonders zweckmäßigen Ausgestaltung kann vorgesehen sein, dass die erfindungsgemäße Beschichtungszusammensetzung ferner mindestens einen zweiten Füllstoff (Komponente e)) aufweist mit einer Partikelgröße D₅₀, die größer ist als die Partikelgröße D₅₀ des ersten Füllstoffs, sofern kein erstes Pigment enthalten ist, oder die größer ist als die Partikelgröße D₅₀ des ersten Pigments, sofern kein erster Füllstoff enthalten ist, oder die größer ist als die Partikelgröße D₅₀ des ersten Füllstoffs und des ersten Pigments, sofern erster Füllstoff und ersten Pigment enthalten sind.

Durch Mitverwendung des zweiten Füllstoffes kann das Deckvermögen der erfindungsgemäßen Beschichtungszusammensetzung nochmals verbessert werden. Der Trockengewichtsanteil an dem mindestens einen zweiten Füllstoff, bezogen auf das Gesamttrockengewicht der Beschichtungszusammensetzung, ist zweckmäßigerweise größer 5 Gewichtsprozent, vorzugsweise größer 8 Gewichtsprozent und besonders bevorzugt größer 10 Gewichtsprozent ist. Hierbei sind solche Beschichtungszusammensetzungen besonders vorteilhaft, bei denen die Menge an zweitem Füllstoff vorzugsweise im Bereich von 8 bis 23 Gewichtsprozent und besonders bevorzugt im Bereich von 15 bis 19 Gewichtsprozent, jeweils bezogen auf das Gesamttrockengewicht der Beschichtungszubereitung, liegt. Bezogen auf das Gesamttrockengewicht an erstem und zweitem Pigment, erstem und zweitem Füllstoff, organischem Bindemittel, Wasserglas und Kieselsol ist der Trockengewichtsanteil an zweitem Füllstoff vorzugsweise im Bereich von 5,0 bis 13,0 Gewichtsprozent und bevorzugt im Bereich von 9,0 bis 11,0 Gewichtsprozent.

Alternativ sowie insbesondre zusätzlich sind, sofern in den erfindungsgemäßen Beschichtungszusammensetzungen vorhanden, solche zweiten Füllstoffe bevorzugt, bei denen der D₁₀-Wert größer 0,4 µm, vorzugsweise größer oder gleich 0,5 µm und besonders bevorzugt größer oder gleich 1,0 µm, und/oder der D₅₀-Wert größer oder gleich 0,8 µm, vorzugsweise größer oder gleich 1,0 µm und besonders bevorzugt größer oder gleich 1,5 µm, und/oder der D₉₀-Wert größer oder gleich 2,0 µm, vorzugsweise größer oder gleich 2,5 µm und besonders bevorzugt größer oder gleich 3,0 µm, ist. Hierbei sind solche zweite Füllstoffe besonders zweckmäßig, die einen D₁₀-Wert größer 0,4 µm, vorzugsweise größer oder gleich 0,5 µm und besonders bevorzugt größer oder gleich 1,0 µm, und einen D₅₀-Wert größer oder gleich 0,8 µm, vorzugsweise größer oder gleich 1,0 µm und besonders bevorzugt größer oder gleich 1,5 µm, und einen D₉₀-Wert größer oder gleich 2,0 µm, vorzugsweise größer oder gleich 2,5 µm und besonders bevorzugt größer oder gleich 3,0 µm, aufweisen.

Grundsätzlich können die ersten und/oder zweiten Füllstoffe ausgewählt werden aus der Gruppe bestehend aus calcitischen Füllstoffen, insbesondere Calciumcarbonate, Dolomite, Calcite und/oder Aragonite, und silikatischen Füllstoffen, insbesondere Quarzite, Schichtsilikate, Feldspate, Kaolin, Vulkanite und/oder Kieselerden wie Kieselgur und Diatomeenerden, oder aus beliebigen Mischungen dieser Füllstoffe. Unter den erfindungsgemäßen Beschichtungszusammensetzungen sind außerdem auch solche bevorzugt, wie denen keine plättchenförmigen Füllstoffe, weder als erste, noch als zweite Füllstoffe vorliegen, beispielsweise keine Schichtsilikate. In einer zweckmäßigen Ausführungsform stellen die ersten und zweiten Füllstoffe unterschiedliche mineralische Füllstoffe dar, beispielsweise einen silikatischen Füllstoff für den ersten Füllstoff und einen calcitischen Füllstoff für den zweiten Füllstoff.

Gemäß einer weiteren zweckmäßigen Ausführungsform kann die erfindungsgemäße Beschichtungszusammensetzung über mindestens einen Farbstoff und/oder mindestens ein zweites Pigment verfügen mit einer Partikelgröße D₅₀, die größer ist als die Partikelgröße D₅₀ des ersten Füllstoffs, sofern kein erstes Pigment enthalten ist, oder die größer ist als die Partikelgröße D₅₀ des ersten Pigments, sofern kein erster Füllstoff enthalten ist, oder die größer ist als die Partikelgröße D₅₀ des ersten Füllstoffs und des ersten Pigments, sofern erster Füllstoff und ersten Pigment enthalten sind (Komponente f). Es hat sich gezeigt, dass in einer zweckmäßigen Ausgestaltung die Menge an ersten und zweiten Füllstoffen sowie ersten Pigmenten im Bereich von 14 bis 70 Gew.-%, vorzugsweise im Bereich von 20 bis 60 Gew.-% und besonders bevorzugt im Bereich von 25 bis 45 Gew.-% liegt. Besonders geeignete erfindungsgemäße Beschichtungszusammensetzungen erhält man auch dadurch, dass diese mindestens ein Hydrophobierungsmittel enthalten. Als Hydrophobierungsmittel kommen insbesondere Alkylalkoxysilane, Alkylalkoxysiloxane und Alkylsilikonate sowie deren Mischungen in Frage. Unter den Alkylalkoxysilanen sind Alkyltrialkoxysilane bevorzugt. Exemplarisch seien als geeignete Vertreter der Alkylalkoxysilane Verbindung der nachfolgenden Formel (I) genannt: (R¹-O)ₓ(H)_{y}M(R²)_{z} mit M = Si, Ge, Ti, Zr oder Hf, R1 = Methyl, Ethyl, i-Propyl, n-Propyl, i-Butyl, n-Butyl oder t-Butyl, R2 = geradkettig oder verzweigtes C3- bis C32-Alkyl, Cycloalkyl, Aryl, Alkylaryl, x = 1, 2 oder 3, y = 0, 1 oder 2, z = 1, 2 oder 3, wobei x + y = 1, 2 oder 3 und x + y + z = 4 ist. Bevorzugt wird zurückgegriffen auf Verbindung gemäß Formel (I), für die gilt: M = Si, R1 = Ethyl oder i-Propyl oder n-Propyl, insbesondere Ethyl, R2 = geradkettig oder verzweigtes C5- bis C12-Alkyl, insbesondere n-Octyl oder iso-Octyl, und x = 2 oder 3, insbesondere 3, y = 0 und z = 1 oder 2, insbesondere 1. Besonders geeignete Alkylalkoxysilane sind Mono-, Di- oder Triethoxy-(C6-bis C12-Alkyl)-silan, wobei Triethoxy-iso-octylsilan und Triethoxy-n-octylsilan besonders bevorzugt sind.

Geeignete Alkylalkoxysiloxane stellen Dimere und Oligomere der vorangehend genannten Alkylalkoxysilane dar.

Besonders bevorzugt wird auch auf wasserlösliche Hydrophobierungsmittel in Form von Alkylsilikonaten zurückgegriffen. Geeignete Alkylsilikonate umfassen Verbindungen der Formel (II) HO-[Si(R³)(OX)-O-]ₙH, worin der Rest R³ eine Alkylgruppe mit 1 bis 8 C-Atomen, X ein Kation und n eine Zahl im Bereich von 1 bis 6 bedeutet. Vorzugsweise liegt das Molgewicht dieser Alkylsilikonate im Bereich von 100 bis 500. In einer besonders geeigneten Ausgestaltung ist R3 eine Methyl-, Ethyl-, i-Propyl- oder n-Propylgruppe, vorzugsweise eine Methylgruppe. Als Kationen sind insbesondere die Alkalimetalle, insbesondere Kalium, geeignet. Beispielhaft seien als bevorzugte Alkylsilikonate Kaliummethylsilikonat und Natriumpropylsilikonat genannt. Als besonders vorteilhaft hat sich hier Kaliummethylsilikonat erwiesen. Der Trockenanteil an Hydrophobierungsmittel, insbesondere an Alkylsilikonaten wie Kaliummethylsilikonaten, in der wasserfreien erfindungsgemäßen Beschichtungszusammensetzung liegt regelmäßig im Bereich vom 0,1 bis 9 Gewichtsprozent, vorzugsweise im Bereich von 0,2 bis 6 Gewichtsprozent und besonders bevorzugt im Bereich von 0,75 bis 4 Gewichtsprozent.

Die erfindungsgemäßen Beschichtungszusammensetzungen enthalten in einer zweckmäßigen Ausgestaltung, um als Beschichtungsmasse auf einer Substratoberfläche aufgetragen zu werden, Wasser (Komponente h)). Interessanterweise sind die erfindungsgemäßen Beschichtungszusammensetzungen, auch wenn als wässriges System vorliegend, ohne Anwesenheit von Konservierungsmitteln sehr stabil, das heißt sie verfügen über eine ausgeprägte Lagerstabilität. In Form wässriger Systeme stellen die erfindungsgemäßen Beschichtungszusammensetzungen insbesondere Dispersionsfarben, vorzugsweise konservierungsmittelfreie Dispersionsfarben dar. Dispersionsfarben, auch Kunststoffdispersionsfarben genannt, basieren gemäß DIN 18363 auf einer Kunststoffdispersion sowie auf Pigmenten und Füllstoffen. Bei Wasser enthaltenden erfindungsgemäßen Beschichtungszusammensetzungen liegt der pH-Wert vorzugsweise oberhalb von 10,0, bevorzugt oberhalb von 10,5 und besonders bevorzugt bei 11 oder darüber. Der pH-Wert kann durch die zugesetzte Menge an Wasserglas eingestellt werden. Alternativ oder zusätzlich kann für die pH-Wert-Einstellung auch auf Basen wie Alkali- oder Erdalkalihydroxide wie Kaliumhydroxid und/oder auf Aminverbindungen, z.B. 2-Amino-2-ethyl-1,3-propandiol, zurückgegriffen werden.

Exemplarisch seien als geeignete organische Bindemittel Vinylacetat/Ethylen-Copolymere, Copolymere auf Basis von Vinylaromaten, insbesondere Styrol, und Acrylaten oder auf Basis von Reinacrylaten, insbesondere auf der Basis von Reinacrylaten genannt. Reinacrylate umfassen Homo- und insbesondere Copolymere von (Meth)acrylaten, d.h. Acrylaten und/oder Methacrylaten, gegebenenfalls auch mit (Meth)acrylsäure, d.h. Acryl- und/oder Methacrylsäure, als Comonomerbaustein. Das organische Bindemittel wird in einer besonders zweckmäßigen Ausgestaltung in Form einer wässrigen Bindemitteldispersion eingesetzt. Demgemäß kommen als organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure, insbesondere der Versatinsäure, und gegebenenfalls Vinylaromaten, insbesondere Styrol. Geeignete Acrylatbindemittel verfügen in einer zweckmäßigen Ausgestaltung über eine Molmasse im Bereich von 300.000 g/mol und darüber. Besonders geeignete organische Bindemittel weisen eine Mindestfilmbildetemperatur (MFT-Wert), bestimmt gemäß ISO 2115:1996 (Ausgabedatum: 2001-04), kleiner oder gleich 10, insbesondere kleiner oder gleich 7 und besonders bevorzugt kleiner gleich 5 auf. Der Trockengewichtsanteil dieser organischen Bindemittel kann grundsätzlich in weiten Bereichen variiert werden. Solche erfindungsgemäßen Beschichtungszusammensetzungen sind bevorzugt, bei denen der Trockengewichtsanteil an organischem Bindemittel, bezogen auf das Gesamttrockengewicht der Beschichtungszusammensetzung, größer oder gleich 25,3 Gewichtsprozent, vorzugsweise größer oder gleich 26,0 Gewichtsprozent, besonders bevorzugt größer oder gleich 28,0 Gewichtsprozent und insbesondere größer oder gleich 29,0 Gewichtsprozent ist. In einer geeigneten Ausfuhrungsform liegt der Trockengewichtsanteil an organischem Bindemittel, bezogen auf das Gesamttrockengewicht der Beschichtungszusammensetzung, im Bereich von 15 bis 50 Gewichtsprozent, insbesondere im Bereich von 27 bis 31 Gewichtprozent. Bezogen auf das Gesamttrockengewicht an erstem und zweitem Pigment, erstem und zweitem Füllstoff, organischem Bindemittel, Wasserglas und Kieselsol ist der Trockengewichtsanteil an organischem Bindemittel vorzugsweise größer 15 Gewichtsprozent, vorzugsweise größer 16 Gewichtsprozent und besonders bevorzugt größer 17 Gewichtsprozent ist. In einer geeigneten Ausfuhrungsform liegt der Trockengewichtsanteil an organischem Bindemittel, bezogen auf das Gesamttrockengewicht der vorangehend genannten Komponenten der erfindungsgemäßen Beschichtungszusammensetzung, im Bereich von 10 bis 30 Gewichtsprozent, insbesondere im Bereich von 16 bis 18 Gewichtprozent Sehr zufriedenstellende Resultate können durch Verwendung sogenannter Reinacrylate als organische Bindemittel erzielt werden. Mit steigendem Anteil an organischen Bindemitteln kann der Glanz der aus der erfindungsgemäßen Beschichtungszusammensetzung erhaltenen Beschichtung erhöht, wie auch deren Kratzfestigkeit verbessert werden.

Unter den erfindungsgemäßen Beschichtungszusammensetzungen lösen diejenigen die der Erfindung zugrundeliegende Aufgabe besonders gut, bei denen der Trockengewichtsanteil an Kieselsol, bezogen auf das Gesamttrockengewicht der Beschichtungszusammensetzung, kleiner 9,0 Gewichtsprozent ist, vorzugsweise im Bereich von 0,3 bis 7,0 Gewichtsprozent, besonders bevorzugt im Bereich von 1,0 bis 6,0 und insbesondere im Bereich von 2,5 bis 5,0 Gewichtsprozent liegt.

Bezogen auf das Gesamttrockengewicht an erstem und zweitem Pigment, erstem und zweitem Füllstoff, organischem Bindemittel, Wasserglas und Kieselsol ist der Trockengewichtsanteil an Kiesel vorzugsweise kleiner 5,0 Gewichtsprozent ist, vorzugsweise im Bereich von 0,2 bis 4,0 Gewichtsprozent und besonders bevorzugt im Bereich von 0,6 bis 2,8 Gewichtsprozent.

Geeignete Kieselsole sind dem Fachmann bekannt. Kieselsole sind im Handel in Form wässriger kolloidaler Suspensionen von Polykieselsäuremolekülen erhältlich. Das Kieselsol ist vorzugsweise alkalisch und hat insbesondere vorzugsweise einen pH-Wert größer 9. Auch hat es sich als sehr vorteilhaft erwiesen, insbesondere im Hinblick auf die Einstellung des gewünschten Glanz- bzw. Mattheitsgrades, sehr feinteilige Kieselsole zu verwenden. Hierbei liegt die mittlere Partikelgröße des Kieselsols vorzugsweise bei 80 nm oder darunter und ist bevorzugt kleiner oder gleich 40 nm und insbesondere bevorzugt kleiner oder gleich 20 nm. Ganz besonders bevorzugt ist die mittlere Partikelgröße des Kieselsols kleiner oder gleich 10 nm. In einer Ausgestaltung kann die mittlere Partikelgröße des Kieselsols ebenfalls gemäß DIN ISO 9276-1:2004-09 und ISO 9276-2:2014-05 ermittelt werden.

Grundsätzlich kommen als Wassergläser Natrium-, Kalium- und Lithiumwasserglas sowie deren Mischungen in Betracht. Bevorzugt wird für die erfindungsgemäßen Beschichtungszusammensetzungen auf Lithiumwasserglas zurückgegriffen. Bei Wasserglas handelt es sich z.B. um Reaktionsprodukte aus Alkalikarbonaten bzw. -hydroxiden mit Quarzsand. Diese werden kommerziell häufig in Form wässriger Lösungen angeboten. In diesen kommerziell erhältlichen wässrigen Lösungen liegt das Wasserglas im Allgemeinen mit einem 22 Gew.-%igen Feststoffanteil vor. Wasserglas kann grundsätzlich auch in Pulverform eingesetzt werden.

Ferner sind unter den erfindungsgemäßen Beschichtungszusammensetzungen auch diejenigen besonders geeignet, bei denen der Trockengewichtsanteil an Wasserglas, bezogen auf das Gesamttrockengewicht der Beschichtungszusammensetzung, im Bereich von 0,1 bis 3,5 Gewichtsprozent, vorzugsweise im Bereich von 0,3 bis 2,4 Gewichtsprozent und besonders bevorzugt im Bereich von 0,6 bis 1,8 Gewichtsprozent liegt. Bezogen auf das Gesamttrockengewicht an erstem und zweitem Pigment, erstem und zweitem Füllstoff, organischem Bindemittel, Wasserglas und Kieselsol ist der Trockengewichtsanteil an Wasserglas vorzugsweise im Bereich von 0,1 bis 2,0 Gewichtsprozent, vorzugsweise im Bereich von 0,2 bis 1,4 Gewichtsprozent und besonders bevorzugt im Bereich von 0,4 bis 1,0 Gewichtsprozent.

Der Anteil an Wasserglas kann derart gering gewählt werden, dass Wasserglas in den aus den erfindungsgemäßen Beschichtungszubereitungen erhaltenen Beschichtungen keine oder nur eine untergeordnete Bindemittelfunktion ausübt.

In einer zweckmäßigen Ausgestaltung liegt das Verhältnis der Troekengewichtsanteile von Kieselsole zu Wasserglas in den erfindungsgemäßen Beschichtungszusammensetzungen im Bereich von 1,5 : 1 bis 10:1 und bevorzugt im Bereich von 5 : 1 bis 7,5 : 1.

Schließlich können die erfindungsgemäßen Beschichtungszusammensetzungen auch übliche Additive (Komponente g)) wie Stabilisatoren, Netzmittel, Verdicker, Dispergiermittel, Neutralisationsmittel und/oder Entschäumer enthalten. Geeignete Verdicker umfassen z.B. Acrylatverdicker, Polyurethanverdicker, Verdicker auf Polysaccharidbasis oder Verdicker auf Polyether-Polyolbasis oder deren beliebige Mischung.

Die der Erfindung zugrunde liegende Aufgabe wird des Weiteren gelöst durch eine Beschichtung erhalten oder erhältlich aus einer erfindungsgemäßen Beschichtungszusammensetzung. Die mit diesen erfindungsgemäßen Beschichtungszusammensetzungen erhaltenen Beschichtungen zeichnen sich dadurch aus, dass diese bei einem Messwinkel von 60°, bestimmt nach DIN EN ISO 2813:2014 (Ausgabedatum: 2015-02), einen Reflektometerwert kleiner 60° und bei einem Messwinkel von 85° einen Reflektometerwert größer oder gleich 10° aufweisen und damit, eingestuft nach der DIN EN 13300 (Ausgabe 11.2002), in die Kategorie "mittlerer Glanz" fallen. Mit den erfindungsgemäßen Zusammensetzungen gelingt es sogar, zu solchen Beschichtungen zu gelangen, die bei einem Messwinkel von 60° einen Glanz bestimmt nach DIN EN ISO 2813:2014 (Ausgabedatum: 2015-02) der Kategorie "glänzend", eingestuft nach der DIN EN 13300 (Ausgabe 11.2002), aufweisen. Die vorangehend genannten Ergebnisse werden insbesondere auch mit Beschichtungen aus konservierungsmittelfreien erfindungsgemäßen Beschichtungszusammensetzungen erzielt.

Die erfindungsgemäßen Beschichtungszusammensetzungen werden im Sinne der vorliegenden Erfindung im Einklang mit der "Vergabegrundlage für Umweltzeichen" der RAL gGmbH betreffend "Emissionsarme Innenwandfarben RAL-UZ 102" (Ausgabe Januar 2015) als konservierungsmittelfrei angesehen, wenn darin keine Konservierungsmittel oder Konservierungsmittel, auf die Einzelsubstanz bezogen (einschließlich Fonnaldehyd), in einer Menge kleiner 2 ppm, sowie in Bezug auf CIT (5-Chlor-2-methyl-4-isothiazolin) in einer Menge kleiner 0,5 ppm enthalten sind.

Mit den erfindungsgemäßen Beschichtungszusammensetzungen lassen sich ohne weiteres Beschichtungen erhalten, die hinsichtlich des Nassabriebs, bestimmt nach DIN EN ISO 11998:2006-10, in die Klasse 1 oder 2 gemäß DIN EN 13300 (Ausgabe 11.2002) eingeordnet werden können. Nach der DIN EN 13300 findet eine Einordnung in die Klasse 1 statt, wenn bei 200 Scheuerzyklen ein Nassabrieb kleiner 5 µm, in die Klasse 2, wenn bei 200 Scheuerzyklen ein Nassabrieb von 5 µm bis kleiner 20 µm, in die Klasse 3, wenn bei 200 Scheuerzyklen ein Nassabrieb von 20 µm bis kleiner 70 µm, in die Klasse 4, wenn bei 40 Scheuerzyklen ein Nassabrieb kleiner 70 µm und in die Klasse 5, wenn bei 40 Scheuerzyklen ein Nassabrieb von 70 µm und darüber festgestellt wird.

Nachfolgend wird eine erfindungsgemäßen Geschichtezusammensetzungen anhand eines Beispiels beschrieben.

### Beispiel:

Die Trockengewichtsanteile der die erfindungsgemäße Beschichtungszusammensetzung bildenden Komponenten waren wie folgt:

| | |
|---|---|
| erster Füllstoff (Kaolin; D₁₀ 0,2 µm, D₅₀ 0,4 µm, D₉₀ 1,5 µm) | 7,70 Gew.-% |
| zweiter Füllstoff (CaCO3; D₁₀ 0,5 µm, D₅₀ 0,8 µm, D₉₀ 2,0 µm) | 17,10 Gew.-% |
| erstes Pigment (TiO2; D₁₀ 0,33 µm, D₅₀ 0,47 µm, D₉₀ 1,07 µm) | 34,21 Gew.-% |
| organisches Bindemittel (Reinacrylat) | 29,42 Gew.-% |
| Wasserglas (Lithium-Wasserglas) | 1,13 Gew.-% |
| Kieselsol | 3,85 Gew.-% |
| Verdicker | 0,43 Gew.-% |
| Neutralisationsmittel | 0,34 Gew.-% |
| Netzmittel | 1,37 Gew.-% |
| Stabilisator | 0,51 Gew.-% |
| Hydrophobierungsmittel | 3,08 Gew.-% |
| Entschäumer | 0,86 Gew.-% |

Die aus den einzelnen Bestandteilen hergestellte erfindungsgemäße Beschichtungszusammensetzung gemäß dem vorangehend genannten Beispiel enthielt, bezogen auf das Gesamttrockengewicht der Beschichtungszusammensetzung, ca. 42 Gewichtsprozent an Wasser.

Für eine aus dieser Beschichtungsmasse hergestellte konservierungsmittelfreie Beschichtung wurde bei einem Messwinkel von 60°, bestimmt nach DIN EN ISO 2813:2014 (Ausgabedatum: 2015-02), ein Reflektometerwert von 72,1° ermittelt. Der Glanz dieser Beschichtung lag somit in der Kategorie "glänzend", eingestuft nach der DIN EN 13300 (Ausgabe 11.2002).

Die in der voranstehenden Beschreibung und den Ansprüchen offenbarten Merkmale der Erfindung können sowohl einzeln als auch in jeder beliebigen Kombination für die Verwirklichung der Erfindung vorteilhaft sein.

## Patentansprüche

1. Beschichtungszusammensetzung, umfassend oder bestehend aus
a) mindestens einem organischen Bindemittel,
b) Wasserglas,
c) Kieselsol,
d) mindestens einem ersten Füllstoff und/oder mindestens einem ersten Pigment, insbesondere Titandioxid, mit einer Partikelgröße D₅₀, ermittelt gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnung von mittleren Partikelgrößen/- durchmessern und Momenten aus Partikelgrößenverteilungen) kleiner oder gleich 2,0 µm, vorzugsweise kleiner oder gleich 1,0 µm und besonders bevorzugt kleiner 0,8 µm, wobei
der Trockengewichtsanteil an Kieselsol größer ist als der Trockengewichtsanteil an Wasserglas, jeweils bezogen auf das Gesamttrockengewicht der Beschichtungszusammensetzung.

2. Beschichtungszusammensetzung nach Anspruch 1, ferner umfassend
e) mindestens einen zweiten Füllstoff mit einer Partikelgröße D₅₀, die größer ist als die Partikelgröße D₅₀ des ersten Füllstoffs, sofern kein erstes Pigment enthalten ist, oder die größer ist als die Partikelgröße D₅₀ des ersten Pigments, sofern kein erster Füllstoff enthalten ist, oder die größer ist als die Partikelgröße D₅₀ des ersten Füllstoffs und des ersten Pigments, sofern erster Füllstoff und erstes Pigment enthalten sind.

3. Beschichtungszusammensetzung nach Anspruch 1 oder 2, ferner umfassend
f) mindestens einen Farbstoff und/oder mindestens ein zweites Pigment mit einer Partikelgröße D₅₀, die größer ist als die Partikelgröße D₅₀ des ersten Füllstoffs, sofern kein erstes Pigment enthalten ist, oder die größer ist als die Partikelgröße D₅₀ des ersten Pigments, sofern kein erster Füllstoff enthalten ist, oder die größer ist als die Partikelgröße D₅₀ des ersten Füllstoffs und des ersten Pigments, sofern erster Füllstoff und erstes Pigment enthalten sind.

4. Beschichtungszusammensetzung nach einem der vorangehenden Ansprüche, ferner umfassend
g) mindestens ein Additiv, insbesondere Stabilisatoren, Netzmittel, Verdicker, Dispergiermittel, Neutralisationsmittel und/oder Entschäumer, und/oder ferner umfassend h) Wasser.

5. Beschichtungszusammensetzung nach einem der vorangehenden Ansprüche, ferner umfassend
i) mindestens ein Hydrophobierungsmittel, insbesondere ausgewählt aus der Gruppe bestehend aus Alkylalkoxysilanen, Alkylalkoxysiloxanen, wasserlöslichen Alkylsiliconaten und deren Mischungen.

6. Beschichtungszusammensetzung nach einem der vorangehenden Ansprüche,
**dadurch gekennzeichnet, dass**
der erste Füllstoff einen
D₁₀-Wert kleiner oder gleich 0,4 µm, vorzugsweise kleiner oder gleich 0,3 µm und besonders bevorzugt kleiner oder gleich 0,2 µm, und/oder einen
D₅₀-Wert kleiner oder gleich 0,75 µm, vorzugsweise kleiner oder gleich 0,6 µm und besonders bevorzugt kleiner oder gleich 0,5 µm, und/oder einen
D₉₀-Wert kleiner 2,0 µm, vorzugsweise kleiner oder gleich 1,9 µm und besonders bevorzugt kleiner oder gleich 1,7 µm, und/oder
der zweite Füllstoff einen
D₁₀-Wert größer 0,4 µm, vorzugsweise größer oder gleich 0,5 µm und besonders bevorzugt größer oder gleich 1,0 µm, und/oder einen
D₅₀-Wert größer oder gleich 0,8 µm, vorzugsweise größer oder gleich 1,0 µm und besonders bevorzugt größer oder gleich 1,5 µm, und/oder einen
D₉₀-Wert größer oder gleich 2,0 µm, vorzugsweise größer oder gleich 2,5 µm und besonders bevorzugt größer oder gleich 3,0 µm, und/oder
das erste Pigment einen
D₁₀-Wert kleiner oder gleich 0,4 µm, vorzugsweise kleiner oder gleich 0,35 µm und besonders bevorzugt kleiner oder gleich 0,33 µm, und/oder einen
D₅₀-Wert kleiner oder gleich 0,75 µm, vorzugsweise kleiner oder gleich 0,6 µm und besonders bevorzugt kleiner oder gleich 0,5 µm, und/oder einen
D₅₀-Wert kleiner 2,0 µm, vorzugsweise kleiner oder gleich 1,75 µm und besonders bevorzugt kleiner oder gleich 1,5 µm, aufweist,
wobei die D₁₀-, D₅₀- und D₉₀-Werte gemäß DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2:
Berechnung von mittleren Partikelgrößen/-durchmessem und Momenten aus Partikelgrößenverteilungen) zu ermitteln sind.

7. Beschichtungszusammensetzung nach einem der vorangehenden Ansprüche, **dadurch gekennzeichnet, dass**
der Trockengewichtsanteil an organischem Bindemittel, bezogen auf das Gesamttrockengewicht der Beschichtungszusammensetzung, größer oder gleich 25,3 Gewichtsprozent, vorzugsweise größer oder gleich 26,0 Gewichtsprozent, besonders bevorzugt größer oder gleich 28,0 Gewichtsprozent und insbesondere größer oder gleich 29,0 Gewichtsprozent ist und/oder dass
der Trockengewichtsanteil an Kieselsol, bezogen auf das Gesamttrockengewicht der Beschichtungszusammensetzung, kleiner 9,0 Gewichtsprozent ist, vorzugsweise im Bereich von 0,3 bis 7,0 Gewichtsprozent, besonders bevorzugt im Bereich von 1,0 bis 6,0 Gewichtsprozent und insbesondere im Bereich von 2,5 bis 5,0 Gewichtsprozent liegt und/oder dass
der Trockengewichtsanteil an Wasserglas, bezogen auf das Gesamttrockengewicht der Beschichtungszusammensetzung, im Bereich von 0,1 bis 3,5 Gewichtsprozent, vorzugsweise im Bereich von 0,3 bis 2,4 Gewichtsprozent und besonders bevorzugt im Bereich von 0,6 bis 1,8 Gewichtsprozent liegt und/oder dass
der Trockengewichtsanteil an dem mindestens einen ersten Pigment, insbesondere an Titandioxid, bezogen auf das Gesamttrockengewicht der Beschichtungszusammensetzung, größer 5 Gewichtsprozent, vorzugsweise größer 10 Gewichtsprozent und besonders bevorzugt größer 20 Gewichtsprozent ist und/oder dass
der Trockengewichtsanteil an dem mindestens einen ersten Füllstoff, bezogen auf das Gesamttrockengewicht der Beschichtungszusammensetzung, größer 2 Gewichtsprozent, vorzugsweise größer 4 Gewichtsprozent und besonders bevorzugt größer 5 Gewichtsprozent ist und/oder dass
der Trockengewichtsanteil an dem mindestens einen zweiten Füllstoff, bezogen auf das Gesamttrockengewicht der Beschichtungszusammensetzung, größer 5 Gewichtsprozent, vorzugsweise größer 8 Gewichtsprozent und besonders bevorzugt größer 10 Gewichtsprozent ist.

8. Beschichtungszusammensetzung nach einem der vorangehenden Ansprüche, **dadurch gekennzeichnet, dass**
diese frei von Konservierungsmittel ist.

9. Beschichtungszusammensetzung nach einem der vorangehenden Ansprüche, **dadurch gekennzeichnet, dass**
das Wasserglas Natrium-, Kalium- und/oder Lithiumwasserglas, bevorzugt Lithiumwasserglas, ist.

10. Beschichtungszusammensetzung nach einem der vorangehenden Ansprüche, **dadurch gekennzeichnet, dass**
das organische Bindemittel eine Mindestfilmbildetemperatur (MFT-Wert), bestimmt gemäß ISO 2115:1996 (Ausgabedatum: 2001-04) kleiner oder gleich 10, insbesondere kleiner oder gleich 7 und besonders bevorzugt kleiner gleich 5 aufweist.

11. Beschichtungszusammensetzung nach einem der vorangehenden Ansprüche, **dadurch gekennzeichnet, dass**
das organische Bindemittel Vinylacetat/Ethylen-Copolymere, Copolymere auf Basis von Vinylaromaten, insbesondere Styrol, und Acrylaten oder auf Basis von Reinacrylaten, insbesondere auf der Basis von Reinacrylaten, umfasst.

12. Beschichtungszusammensetzung nach einem der vorangehenden Ansprüche,
**dadurch gekennzeichnet, dass**
der erste Füllstoff und/oder der zweite Füllstoff ausgewählt sind aus der Gruppe bestehend aus calcitischen Füllstoffen, insbesondere Calciumcarbonate, Dolomite, Calcite und/oder Aragonite, und silikatischen Füllstoffen, insbesondere Quarzite, Schichtsilikate, Feldspate, Vulkanite und/oder Kieselerden wie Kieselgur und Diatomeenerden, und aus beliebigen Mischungen dieser Füllstoffe.

13. Beschichtungszusammensetzung nach einem der vorangehenden Ansprüche,
**dadurch gekennzeichnet, dass**
die mittlere Partikelgröße des Kieselsols kleiner oder gleich 80 nm, vorzugsweise kleiner oder gleich 40 nm und insbesondere bevorzugt kleiner oder gleich 20 nm, ganz besonders bevorzugt kleiner oder gleich 10 nm ist.

14. Beschichtung erhalten oder erhältlich aus einer Beschichtungszusammensetzung nach einem der vorangehenden Ansprüche.

15. Beschichtung nach Anspruch 14, **dadurch gekennzeichnet, dass** diese einen Glanz der Kategorie "glänzend" ermittelt gemäß DIN EN ISO 2813:2014 (Ausgabedatum: 2015-02) bei einem Messwinkel von 60° und eingestuft gemäß DIN EN 13300 (Ausgabe 11.2002) oder einen Glanz der Kategorie "mittlerer Glanz" ermittelt gemäß DIN EN ISO 2813:2014 (Ausgabedatum: 2015-02) bei einem Messwinkel von 60° und einem Messwinkel von 85° und eingestuft gemäß DIN EN 13300 (Ausgabe 11.2002) aufweist.

16. Verwendung der Beschichtungszusammensetzung nach einem der Ansprüche 1 bis 13 für die Beschichtung von Substratoberflächen, insbesondere von Gebäudefassaden oder den Wänden von Gebäudeinnenräumen.

17. Verwendung nach Anspruch 16, **dadurch gekennzeichnet, dass** die Beschichtung eine solche mit einem Glanz der Kategorie "glänzend" ermittelt gemäß DIN EN ISO 2813:2014 (Ausgabedatum: 2015-02) bei einem Messwinkel von 60° und eingestuft gemäß DIN EN 13300 (Ausgabe 11.2002) oder eine solche mit einem Glanz der Kategorie "mittlerer Glanz" ermittelt gemäß DIN EN ISO 2813:2014 (Ausgabedatum: 2015-02) bei einem Messwinkel von 60° und einem Messwinkel von 85° und eingestuft gemäß DIN EN 13300 (Ausgabe 11.2002) ist.

## Claims

1. A coating composition, comprising or consisting of
a) at least one organic binding agent,
b) water glass,
c) silica sol,
d) at least one first filler and/or at least one first pigment, in particular titanium dioxide, with a particle size D₅₀, determined in accordance with DIN ISO 9276-1:2004-09 (Representation of results of particle size analysis - Part 1: Graphic representation) and ISO 9276-2:2014-05 (Representation of results of particle size analysis - Part 2: Calculation of average particle sizes/diameters and moments from particle size distributions) less than or equal to 2.0 µm, preferably less than or equal to 1.0 µm and particularly preferably less than 0.8 µm, wherein
the dry weight content of silica sol is greater than the dry weight content of water glass, relative to the total dry weight of the coating composition respectively.

2. The coating composition according to Claim 1, also comprising
e) at least one second filler with a particle size D₅₀, which is greater than the particle size D₅₀ of the first filler, provided it does not contain a first pigment, or which is greater than the particle size D₅₀ of the first pigment, provided it does not contain a first filler, or which is greater than the particle size D₅₀ of the first filler and the first pigment, provided that it contains the first filler and first pigment.

3. The coating composition according to Claim 1 or 2, also comprising
f) at least one dye and/or at least one second pigment with a particle size D₅₀, which is greater than the particle size D₅₀ of the first filler, provided that it does not contain a first pigment, or which is greater than the particle size D₅₀ of the first pigment, provided that it does not contain a first filler, or which is greater than the particle size D₅₀ of the first filler and the first pigment, provided that it contains the first filler and a first pigment.

4. The coating composition according to any of the preceding claims, also comprising g) at least one additive, in particular stabilisers, wetting agents, thickening agents, dispersing agents, neutralising agents and/or defoaming agents, and/or also comprising h) water.

5. The coating composition according to any of the preceding claims, also comprising
i) at least one hydrophobic agent, selected in particular from a group comprising alkylalkoxysilanes, alkylalkoxysiloxanes, water-soluble alkylsiliconates and mixtures thereof.

6. The coating composition according to any of the preceding claims,
**characterised in that**
the first filler has a
D₁₀ value less than or equal to 0.4 µm, preferably less than or equal to 0.3 µm and particularly preferably less than or equal to 0.2 µm, and/or a
D₅₀ value less than or equal to 0.75 µm, preferably less than or equal to 0.6 µm and particularly preferably less than or equal to 0.5 µm, and/or a
D₉₀ value less than 2.0 µm, preferably less than or equal to 1.9 µm and particularly preferably less than or equal to 1.7 µm, and/or
the second filler has a
D₁₀ value greater than 0.4 µm, preferably greater than or equal to 0.5 µm and particularly preferably greater than or equal to 1.0 µm, and/or a
D₅₀ value greater than or equal to 0.8 µm, preferably greater than or equal to 1.0 µm and particularly preferably greater than or equal to 1.5 µm, and/or a
D₉₀ value greater than or equal to 2.0 µm, preferably greater than or equal to 2.5 µm and particularly preferably greater than or equal to 3.0 µm, and/or
the first pigment has a
D₁₀ value less than or equal to 0.4 µm, preferably less than or equal to 0.35 µm and particularly preferably less than or equal to 0.33 µm, and/or a D₅₀ value less than or equal to 0.75 µm, preferably less than or equal to 0.6 µm and particularly preferably less than or equal to 0.5 µm, and/or a
D₉₀ value less than 2.0 µm, preferably less than or equal to 1.75 µm and particularly preferably less than or equal to 1.5 µm,
wherein D₁₀, D₅₀ and D₉₀ values are determined in accordance with DIN ISO 9276-1:2004-09 (Representation of results of particle size analysis - Part 1: Graphic representation) and ISO 9276-2:2014-05 (Representation of results of particle size analysis - Part 2: Calculation of average particle sizes/diameters and moments from particle size distributions).

7. The coating composition according to any of the preceding claims, **characterised in that**
the dry weight content of organic binding agent, relative to the total dry weight of the coating composition, is greater than or equal to 25.3 weight percent, preferably greater than or equal to 26.0 weight percent, particularly preferably greater than or equal to 28.0 weight percent and in particular greater than or equal to 29.0 weight percent and/or **in that**
the dry weight content of silica sol, relative to the total dry weight of the coating composition, is less than 9.0 weight percent, preferably in the range of 0.3 to 7.0 weight percent, particularly preferably in the range of 1.0 to 6.0 weight percent and in particular in the range of 2.5 to 5.0 weight percent and/or **in that**
the dry weight content of water glass, relative to the total dry weight of the coating composition, is in the range of 0.1 to 3.5 weight percent, preferably in the range of 0.3 to 2.4 weight percent and particularly preferably in the range of 0.6 to 1.8 weight percent and/or **in that** the dry weight content of the at least one first pigment, in particular titanium dioxide, relative to the total dry weight of the coating composition, is greater than 5 weight percent, preferably greater than 10
weight percent and particularly preferably greater than 20 weight percent and/or **in that** the dry weight content of the at least one first filler, relative to the total dry weight of the coating composition, is greater than 2 weight percent, preferably greater than 4 weight percent and particularly preferably greater than 5 weight percent and/or **in that** the dry weight content of the at least one second filler, relative to the total dry weight of the coating composition, is greater than 5 weight percent, preferably greater than 8 weight percent and particularly preferably greater than 10 weight percent.

8. The coating composition according to any of the preceding claims,
**characterised in that**
the latter is free of preservatives.

9. The coating composition according to any of the preceding claims,
**characterised in that**
the water glass is sodium, potassium and/or lithium water glass, preferably lithium water glass.

10. The coating composition according to any of the preceding claims,
**characterised in that**
the organic binding agent has a minimum film-forming temperature (MFT value), determined in accordance with ISO 2115:1996 (publication date: 2001-04) less than or equal to 10, in particular less than or equal to 7 and particularly preferably less than or equal to 5.

11. The coating composition according to any of the preceding claims,
**characterised in that**
the organic binding agent comprises vinyl acetate/ethylene copolymers, copolymers based on vinyl aromatics, in particular styrene, and acrylates or based on pure acrylates, in particular based on pure acrylates.

12. The coating composition according to any of the preceding claims,
**characterised in that**
the first filler and/or the second filler are selected from a group comprising calcitic fillers, in particular calcium carbonates, dolomites, calcites and/or aragonites, and siliceous fillers, in particular quartzites, sheet silicates, feldspars, vulcanites and/or silicas such as kieselguhr and diatomaceous earth, and from any mixtures of said fillers.

13. The coating composition according to any of the preceding claims,
**characterised in that**
the average particle size of the silica sol is less than or equal to 80 nm, preferably less than or equal to 40 nm and in particular preferably less than or equal to 20 nm, more particularly preferably less than or equal to 10 nm.

14. A coating obtained or that can be obtained from a coating composition according to any of the preceding claims.

15. The coating according to claim 14, **characterised in that**
the latter has a gloss value of category "glossy" as defined by DIN EN ISO 2813:2014 (date of publication: 2015-02) at a measurement angle of 60° and classified in accordance with DIN EN 13300 (date of publication 11.2002) or a gloss value of category "medium gloss" determined in accordance with DIN EN ISO 2813:2014 (date of publication: 2015-02) at a measurement angle of 60° and a measurement angle of 85° and classified in accordance with DIN EN 13300 (date of publication 11.2002).

16. A use of the coating composition according to any of Claims 1 to 13 for coating substrate surfaces, in particular the exterior walls or the interior walls of buildings.

17. The use according to Claim 16, **characterised in that**
the coating has a gloss value of category "glossy" as defined by DIN EN ISO 2813:2014 (date of publication: 2015-02) at a measurement angle von 60° and classified in accordance with DIN EN 13300 (publication 11.2002) or with a gloss value of category "average gloss" determined in accordance with DIN EN ISO 2813:2014 (date of publication: 2015-02) at a measurement angle of 60° and a measurement angle of 85° and classified in accordance with DIN EN 13300 (publication 11.2002).

## Revendications

1. Composition de revêtement, comprenant, ou consistant en,
a) au moins un liant organique,
b) un silicate alcalin,
c) un sol de silice,
d) au moins un premier agent de charge et/ou au moins un premier pigment, en particulier un oxyde de titane ayant une taille de particule D₅₀, déterminée conformément à DIN ISO 9276-1:2004-09 (représentation de données obtenues par analyse granulométrique - partie 1 : représentation graphique) et ISO 9276-2:2014-05 (représentation de données obtenues par analyse granulométrique - partie 2 : calculs des tailles/diamètres moyens des particules et des moments à partir de distributions granulométriques), inférieure ou égale à 2,0 µm, avantageusement inférieure ou égale à 1,0 µm et préférentiellement inférieure à 0,8 µm, où
la teneur en poids à sec du sol de silice est supérieure à la teneur en poids à sec du silicate alcalin, relativement au poids sec total de la composition de revêtement.

2. Composition de revêtement selon la revendication 1, comprenant en outre e) au moins un deuxième agent de charge ayant une taille de particule D₅₀ supérieure à la taille de particule D₅₀ du premier agent de charge, si le premier pigment n'est pas contenu, ou supérieure à la taille de particule D₅₀ du premier pigment, si le premier agent de charge n'est pas contenu, ou supérieure à la taille de particule D₅₀ du premier agent de charge et du premier pigment, si le premier agent de charge et le premier pigment sont contenus.

3. Composition de revêtement selon la revendication 1 ou la revendication 2, comprenant en outre
f) au moins un colorant et/ou au moins un deuxième pigment ayant une taille de particule D₅₀ supérieure à la taille de particule D₅₀ du premier agent de charge, si le premier pigment n'est pas contenu, ou supérieure à la taille de particule D₅₀ du premier pigment, si le premier agent de charge n'est pas contenu, ou supérieure à la taille de particule D₅₀ du premier agent de charge et du premier pigment, si le premier agent de charge et le premier pigment sont contenus.

4. Composition de revêtement selon l'une des revendications précédentes, comprenant en outre
g) au moins un additif, en particulier des stabilisateurs, agents réticulants, épaississants, dispersants, neutralisants et/ou anti-moussants, et/ou comprenant en outre h) de l'eau.

5. Composition de revêtement selon l'une des revendications précédentes, comprenant en outre
i) au moins un agent d'hydrophobisation, sélectionné en particulier dans le groupe comprenant alkylalcoxysilanes, alkylalcoxysiloxanes, alkylsiliconates solubles dans l'eau et leurs mélanges.

6. Composition de revêtement selon l'une des revendications précédentes,
**caractérisée en ce que**
le premier agent de charge a une
valeur D₁₀ inférieure ou égale à 0,4 µm, avantageusement inférieure ou égale à 0,3 µm et préférentiellement inférieure ou égale à 0,2 µm, et/ou une
valeur D₅₀ inférieure ou égale à 0,75 µm, avantageusement inférieure ou égale à 0,6 µm et préférentiellement inférieure ou égale à 0,5 µm, et/ou une valeur D₉₀ inférieure ou égale à 2,0 µm, avantageusement inférieure ou égale à 1,9 µm et préférentiellement inférieure ou égale à 1,7 µm, et/ou
le deuxième agent de charge a une
valeur D₁₀ supérieure à 0,4 µm, avantageusement supérieure ou égale à 0,5 µm et préférentiellement supérieure ou égale à 1,0 µm, et/ou une
valeur D₅₀ supérieure ou égale à 0,8 µm, avantageusement supérieure ou égale à 1,0 µm et préférentiellement supérieure ou égale à 1,5 µm, et/ou une valeur D₉₀ supérieure ou égale à 2,0 µm, avantageusement supérieure ou égale à 2,5 µm et préférentiellement supérieure ou égale à 3,0 µm, et/ou
le premier pigment a une
valeur D₁₀ inférieure ou égale à 0,4 µm, avantageusement inférieure ou égale à 0,35 µm et préférentiellement inférieure ou égale à 0,33 µm, et/ou une valeur D₅₀ inférieure ou égale à 0,75 µm, avantageusement inférieure ou égale à 0,6 µm et préférentiellement inférieure ou égale à 0,5 µm, et/ou une valeur D₉₀ inférieure à 2,0 µm, avantageusement inférieure ou égale à 1,75 µm et préférentiellement inférieure ou égale à 1,5 µm,
les valeurs D₁₀, D₅₀ et D₉₀ étant à déterminer conformément à DIN ISO 9276-1:2004-09 (représentation de données obtenues par analyse granulométrique - partie 1 :
représentation graphique) et ISO 9276-2:2014-05 (représentation de données obtenues par analyse granulométrique - partie 2 : calculs des tailles/diamètres moyens des particules et des moments à partir de distributions granulométriques).

7. Composition de revêtement selon l'une des revendications précédentes, **caractérisée en ce que**
la teneur en poids à sec du liant organique, relativement au poids sec total de la composition de revêtement, est supérieure ou égale à 25,3 % en poids, avantageusement supérieure ou égale à 26,0 % en poids, préférentiellement supérieure ou égale à 28,0 % en poids et en particulier supérieure ou égale à 29,0 % en poids, et/ou **en ce que**
la teneur en poids à sec du sol de silice, relativement au poids sec total de la composition de revêtement, est inférieure à 9,0 % en poids, avantageusement comprise entre 0,3 et 7,0 % en poids, préférentiellement comprise entre 1,0 et 6,0 % en poids et en particulier comprise entre 2,5 et 5,0 % en poids, et/ou **en ce que** la teneur en poids à sec du silicate alcalin, relativement au poids sec total de la composition de revêtement, est comprise entre 0,1 et 3,5 % en poids, avantageusement comprise entre 0,3 et 2,4 % en poids et préférentiellement comprise entre 0,6 et 1,8 % en poids, et/ou **en ce que**
la teneur en poids à sec dudit au moins un premier pigment, en particulier l'oxyde de titane, relativement au poids sec total de la composition de revêtement, est supérieure à 5 % en poids, avantageusement supérieure à 10 % en poids et préférentiellement supérieure à 20 % en poids, et/ou **en ce que**
la teneur en poids à sec dudit au moins un premier agent de charge, relativement au poids sec total de la composition de revêtement, est supérieure à 2 % en poids, avantageusement supérieure à 4 % en poids et préférentiellement supérieure à 5 % en poids, et/ou **en ce que**
la teneur en poids à sec dudit au moins un deuxième agent de charge, relativement au poids sec total de la composition de revêtement, est supérieure à 5 % en poids, avantageusement supérieure à 8 % en poids et préférentiellement supérieure à 10 % en poids.

8. Composition de revêtement selon l'une des revendications précédentes,
**caractérisée en ce que**
celle-ci est exempte d'agent de conservation.

9. Composition de revêtement selon l'une des revendications précédentes, **caractérisée en ce que**
le silicate alcalin est du silicate de sodium, du silicate de potassium et/ou du silicate de lithium, préférentiellement du silicate de lithium.

10. Composition de revêtement selon l'une des revendications précédentes, **caractérisée en ce que**
le liant organique a une température filmogène minimale (valeur MFT), déterminée conformément à ISO 2115 :1996 (date de parution : 2001-04) inférieure ou égale à 10, en particulier inférieure ou égale à 7 et préférentiellement inférieure ou égale à 5.

11. Composition de revêtement selon l'une des revendications précédentes, **caractérisée en ce que**
le liant organique comprend des copolymères acétate de vinyle/éthylène, des copolymères à base de composés vinylaromatiques, en particulier styrène et acrylates, ou à base d'acrylates purs, en particulier à base d'acrylates purs.

12. Composition de revêtement selon l'une des revendications précédentes, **caractérisée en ce que**
le premier agent de charge et/ou le deuxième agent de charge sont sélectionnés dans le groupe comprenant des agents de charge calcitiques, en particulier carbonate de calcium, dolomite, calcite et/ou aragonite, et des agents de charge siliceux, en particulier quartzites, silicates lamellaires, feldspath, vulcanites et/ou silices telles que terres d'infusoires et terres de diatomées, et des mélanges quelconques de ces agents de charge.

13. Composition de revêtement selon l'une des revendications précédentes, **caractérisée en ce que**
la taille de particule du sol de silice est inférieure ou égale à 80 µm, avantageusement inférieure ou égale à 40 µm et préférentiellement inférieure ou égale à 20 µm, tout particulièrement inférieure ou égale à 10 µm.

14. Revêtement obtenu ou disponible à partir d'une composition de revêtement selon l'une des revendications précédentes.

15. Revêtement selon la revendication 14, **caractérisé en ce que**
celui-ci a une brillance de catégorie "brillant" déterminée conformément à DIN EN ISO 2813:2014 (date de parution : 2015-02) pour un angle de mesure de 60° et classée conformément à DIN EN 13300 (édition11.2002) ou une brillance de catégorie "moyennement brillant" déterminée conformément à DIN EN ISO 2813:2014 (date de parution : 2015-02) pour un angle de mesure de 60° et un angle de mesure de 85° et classée conformément à DIN EN 13300 (édition 11.2002).

16. Utilisation de la composition de revêtement selon l'une des revendications 1 à 13 pour le revêtement de surfaces de substrats, en particulier de façades de bâtiments ou de parois d'espaces intérieurs de bâtiments.

17. Utilisation selon la revendication 16, **caractérisée en ce que**
le revêtement est un revêtement ayant une brillance de catégorie "brillant" déterminée conformément à DIN EN ISO 2813:2014 (date de parution : 2015-02) pour un angle de mesure de 60° et classée conformément à DIN EN 13300 (édition 11.2002) ou une brillance de catégorie "moyennement brillant" déterminée conformément à DIN EN ISO 2813:2014 (date de parution : 2015-02) pour un angle de mesure de 60° et un angle de mesure de 85° et classée conformément à DIN EN 13300 (édition 11.2002).
